(19) Europäisches Patentamt
European Patent Office
Office européen des brevets

(11) Veröffentlichungsnummer : **0 121 876**
**B1**

(12) **EUROPÄISCHE PATENTSCHRIFT**

(45) Veröffentlichungstag der Patentschrift : **05.03.86**

(51) Int. Cl.⁴ : **C 09 K 19/00**

(21) Anmeldenummer : **84103519.9**

(22) Anmeldetag : **30.03.84**

# (54) Verfahren zur Herstellung von Formkörpern aus thermoplastischen Kunststoffen.

(30) Priorität : **07.04.83 DE 3312487**

(43) Veröffentlichungstag der Anmeldung : **17.10.84 Patentblatt 84/42**

(45) Bekanntmachung des Hinweises auf die Patenterteilung : **05.03.86 Patentblatt 86/10**

(84) Benannte Vertragsstaaten : **BE DE FR GB NL**

(56) Entgegenhaltungen : **EP-A- 0 030 417**

(73) Patentinhaber : **BASF Aktiengesellschaft**
**Carl-Bosch-Strasse 38**
**D-6700 Ludwigshafen (DE)**

(72) Erfinder : **Portugall, Michael, Dr.**
**Raiffeisenstrasse 1d**
**D-6706 Wachenheim (DE)**
Erfinder : **Naegele, Dieter, Dr.**
**Gudastrasse 2**
**D-6520 Worms 24 (DE)**
Erfinder : **Blinne, Gerd, Dr.**
**Im Woogtal 7**
**D-6719 Bobenheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 121 876 B1

**Beschreibung**

Die Erfindung betrifft ein Verfahren zur Herstellung von Formkörpern aus Mischungen, die thermoplastische Kunststoffe und flüssigkristalline Polymere enthalten, bei Temperaturen oberhalb der Verarbeitungstemperatur des thermoplastischen Kunststoffes und innerhalb des flüssigkristallinen Bereiches des flüssigkristallinen Polymeren. Es werden Formkörper erhalten, die verbesserte mechanische Eigenschaften im Vergleich zu solchen haben, die lediglich aus den thermoplastischen Kunststoffen bestehen.

Mischungen aus thermoplastischen Kunststoffen und flüssigkristallinen Polymeren sind bekannt. So werden z. B. in der europäischen Patentanmeldung 80 30 3989.0 (Veröffentlichungsnummer 0030417) solche Mischungen aus Thermoplasten und flüssigkristallinen Polymeren beschrieben, die eine günstigere Verarbeitbarkeit in der Schmelze haben im Vergleich zu den in der Schmelze enthaltenen Thermoplasten. Die flüssigkristalline Polymeren sind bekannt. Sie werden in dieser europäischen Patentanmeldung im einzelnen erwähnt und die Literaturstellen, die solche Polymeren beschreiben, genannt.

Der Erfindung liegt die Aufgabe zugrunde, ein Verfahren zur Herstellung von Formkörpern aus thermoplastischen Kunststoffen aufzuzeigen, daß es ermöglicht, Formkörper mit verbesserten mechanischen Eigenschaften zu erhalten.

Die Aufgabe der Erfindung wird gelöst durch ein Verfahren zur Herstellung von Formkörpern aus Mischungen, die thermoplastische Kunststoffe und flüssigkristalline Polymere enthalten, durch Formgebung bei Temperaturen oberhalb der Verarbeitungstemperatur des thermoplastischen Kunststoffes und innerhalb des flüssigkristallinen Bereiches des flüssigkristallinen Polymeren, wo man bei der angewandten Temperatur auf die Mischung ein elektrisches oder magnetisches Feld einwirken läßt.

Das Verfahren hat den Vorteil, daß man neben bekannten Eigenschaft der besseren Verarbeitbarkeit der Mischungen aus Thermoplasten und flüssigkristallinen Polymeren Formkörper erhält, deren mechanische Eigenschaften, insbesondere deren Elastizitätsmodul wesentlich über den Werten liegt, die man an Formkörpern mißt, die thermoplastische Kunststoffe mit flüssigkristallinen Polymeren enthalten, die nicht einem elektrischen oder magnetischen Feld ausgesetzt waren.

Für das Verfahren kommen alle Polymerisate, Polykondensate und Polyadditionsverbindungen in Frage, die sich thermoplastisch verarbeiten lassen. Geeignet sind z. B. Polyolefine wie LD-Polyethylen, HD-Polyethylen oder Polypropylen. Weiterhin Vinylchloridpolymerisate, wie PVC oder Vinylchloridcopolymerisate sowie chlorierte Vinylchloridpolymerisate. Auch kommen chlorierte Polyolefine in Frage. Weiterhin die Styrolpolymerisate, wie Standardpolystyrol oder mit Kautschuk schlagzäh ausgerüstetes Polystyrol sowie sogenannte ABS-Polymerisate oder ASA-Polymerisate. Ferner kommen Mischungen aus Styrolpolymerisaten und z. B. Polyphenylenoxid in Frage. Auch Polymethacrylsäuremethylester oder Polyacrylate können für das Verfahren verwendet werden. Von den Polykondensaten eignen sich die aliphatischen oder teilaromatischen Polyamide wie z. B. Polyhexamethylenadipinsäure (Polyamid 6.6), Polyhexamethylenazelainsäureamid (Polyamide 6.9) oder z. B. das Copolymere aus Adipinsäure, Isophthalsäure und Hexamethylendiamin, aber auch durch Ringöffnung von Lactamen erhaltene Polyamide wie z. B. Polycaprolactam oder Polylaurinsäurelactam.

Dann weiterhin Polyester, wie z. B. Polyalkylenterephthalate, wie insbesondere Polybutylenterephthalat, Polyethylenterephthalat, weiterhin Polycarbonate z. B. auf Basis von Bisphenol A, außerdem Polysulfone, Polyethersulfone oder Polyetherketone.

Geeignet sind auch Polyacetale, wie Polyoximethylen oder Copolymerisate aus Trioxanen mit Dioxanen. Ferner eignen sich thermoplastisch verarbeitbare Polyurethane, Silikonkautschuke, thermoplastisch verarbeitbare Harnstoff-, Melamin- oder Phenolharze. Schließlich eignen sich noch die thermoplastisch verarbeitbaren Umsetzungsprodukte der Zellulose wie Zelluloseacetat oder Zellulosebutyrate.

Die flüssigkristallinen Polymeren, die in den erfindungsgemäß zu verarbeitenden Mischungen enthalten sind, können auch als LC-Polymere (Liquid crystalline Polymeres) bezeichnet werden. Man versteht darunter Polymere, die in einem Temperaturbereich oberhalb der Glastemperatur bzw. oberhalb des Schmelzpunktes stabile anisotrope Schmelzen bilden. Man bezeichnet daher diese Verbindungen auch als thermotrope flüssigkristalline Polymere.

Typische Polymere die dieses Eigenschaftsbild zeigen sind bekannt. Es handelt sich dabei um Systeme, bei denen starre, formanisotrope Gruppierungen kovalent im Polymeren eingebaut sind. So sind z. B. eine Reihe von flüssigkristallinen Polyestern bekannt. Geeignete LC-Polyester werden z. B. in den US-Patenten Nr. 3 778 410, 4 067 852, 4 083 829, 4 130 545 und 4 161 470 beschrieben.

Auch eignen sich für das Verfahren Polyazemethine mit einer anisotropen Schmelzphase, die z. B. in der US-PS 4 048 148 beschrieben sind. Ferner kommen Polyesteramide mit flüssigkristallinen Phasen in Frage, die z. B. in der US-PS 4 351 918, 4 341 688 oder 4 355 132 beschrieben werden.

Die für das Verfahren ebenfalls geeigneten Polymeren, die mesogene Gruppierungen als Seitenketten z. B. an einer Poly(meth-)acrylathauptkette enthalten, sind Gegenstand der DE-OS 27 22 589. So eignet sich z. B. ein Polymerisat auf Basis einer Polymethacrylathauptkette, das Benzoesäurebiphenylestersysteme als mesogene Seitengruppen enthält.

Die Mischungen aus thermoplastischem Kunststoff und flüssigkristallinen Polymeren enthalten zweckmäßig bezogen auf 100 Gew.-Teile der Mischung 5 bis 99 Gew.-Teile des flüssigkristallinen Polymeren. Vorzugsweise verwendet man 20 bis 70 Gew.-Teile des flüssigkristallinen Polymeren bezogen auf die genannte Menge der Mischung. Die Mischungen können außerdem weitere Zusätze wie Farbpigmente, Weichmacher, Flammschutzmittel, Verstärkungsmittel, die faserförmige Verstärkungsmittel oder Füllstoffe enthalten. Die Menge dieser Zusatzstoffe richtet sich nach den üblicherweise für die genannten Stoffklassen üblichen Bereichen.

Von Bedeutung und wichtig für das Verfahren ist die Bedingung, daß der thermoplastische Kunststoff und das flüssigkristalline Polymere nicht homogen miteinander mischbar sind. Dies ist üblicherweise bei den obengenannten Verbindungen gegeben, doch können Ausnahmen auftreten.

Die Mischungen werden bei Temperaturen verarbeitet, die oberhalb der Verarbeitungstemperatur des thermoplastischen Kunststoffes und innerhalb des flüssigkristallinen Bereiches des flüssigkristallinen Polymeren liegen. Die Verarbeitungsbereiche des thermoplastischen Kunststoffes und der flüssigkristalline Bereich des Polymeren müssen sich zumindest teilweise überlappen. Dabei ist zu berücksichtigen, daß der Zusatz des flüssigkristallinen Polymeren zum Thermoplasten meist eine Erniedrigung der Verarbeitungstemperatur bewirkt. Die Verarbeitungstemperaturen richten sich im einzelnen nach dem verwendeten Thermoplasten und dem flüssigkristallinen Polymeren. Die Verarbeitungsbereiche sind bekannt, ebenso die flüssigkristallinen Bereiche der LC-Polymeren. Sie können der einschlägigen Literatur entnommen werden.

Unter Formgebung sind das Einbringen einer thermoplastischen Schmelze der erfindungsgemäß zu verwendenden Mischungen in eine Form und Abkühlen der Mischung auf Temperaturen, bei denen eine thermoplastische Schmelze nicht mehr vorliegt. Diese Verfahren sind in der Fachliteratur beschrieben. Man versteht darunter z. B. das Spritzgießen oder Strangpressen.

Die Mischungen werden nun so unter Formgebung verarbeitet, daß bei der angewandten Arbeitstemperatur ein elektrisches oder magnetisches Feld auf die Mischungen einwirkt. Verwendet man elektrische Felder, so können diese Felder statisch oder auch Wechselfelder sein. Die Richtung der Feldlinien im zu verarbeitenden Formkörper können sich dabei mit Ort und Zeit ändern. Erforderlich ist es jedoch, daß während der Zeit der Einwirkung des Feldes die Temperatur des Formkörpers zumindest zeitweise so hoch liegt, daß sich das eingesetzte LC-Polymere in seiner flüssigkristallinen Phase befindet. Zweckmäßig arbeitet man z. B. mit elektrischen Feldern, die eine Feldstärke von 0,1 bis 50 KV/cm haben. Arbeitet man mit Wechselfeldern, so haben sich die Frequenzbereiche von 50 Hz bis 200 KHz bewährt. Magnetische Felder haben zweckmäßig eine Feldstärke von 1 bis 100 k Gauss. Es können jedoch auch Bereiche angewendet werden, die außerhalb der oben angegebenen Zahlenangaben liegen.

Die Mischung soll bevorzugt während der Einwirkung des Feldes auf eine Temperatur abgekühlt werden, bei der beide Komponenten wenigstens teilweise kristallin oder glasig erstarrt sind.

Nach dem Verfahren der Erfindung können beliebige Formkörper erhalten werden. Unter Formkörpern sollen geformte Gebilde verstanden werden, die durch Spritzgußverarbeitung herstellbar sind oder durch Verpressen thermoplastischer Kunststoffe in Formen. Es sollen darunter aber auch zweidimensionale flächige Gebilde, wie Folien oder Filme oder Kunststoffbahnen verstanden werden. Weiter rechnen zu den Formkörpern im Sinne der Erfindung Rohre und Stangen sowie Fasern oder Fäden. Das Verfahren der Erfindung ist nicht auf die Anwendung bestimmter Verarbeitungsvorrichtungen beschränkt. Es können sämtliche in der Verarbeitung thermoplastischer Kunststoff übliche Verarbeitungsmaschinen verwendet werden, Voraussetzung ist jedoch, daß sie das Anlegen eines elektrischen oder magnetischen Feldes im Formkörper ermöglichen.

Die nach dem Verfahren der Erfindung erhaltene Formkörper können überall dort eingesetzt werden, so erhöhte mechanische Eigenschaften im Vergleich zu denen des angewendeten Thermoplasten erwünscht sind.

Die in den folgenden Beispielen genannten Teile sind Gewichtsteile, die Prozente Gewichtsprozente.

## Beispiel 1

Die Mischung enthält Standard-Polystyrol, das eine Schmelzviskosität MFI (200/5) von 1,29/min. hat und ein flüssigkristallines Polymeres folgender Struktur

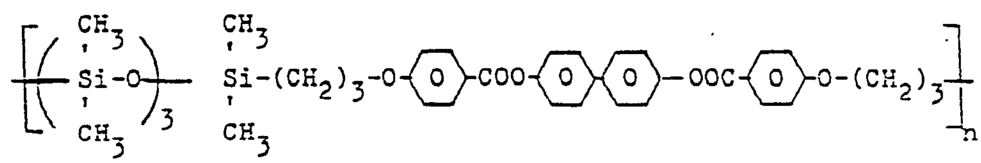

Dieses flüssigkristalline Polymere ist nach der Vorschrift hergestellt aus Carlos Agnilera, Dissertation Mainz, 1981.

Es werden 35 Teile des Standard-Polystyrols mit 20 Teilen des erwähnten flüssigkristallinen Polymeren in einem Brabenderkneter unter Inertgasatmosphäre für die Dauer von 10 Minuten bei 220 °C

gemischt. Die erhaltene Formmasse wurde anschließend bei 200° zu Platten von 1 mm Dicke verpreßt, aus denen Stäbe mit den Ausmaßen 190 × 10 × 1 mm ausgesägt wurden.

Vergleichsweise wurden Stäbe aus Standard-Polystyrol hergestellt.

Anschließend wurden die Stäbe der beschriebenen Mischung in eine Teflonform von 1 mm Dicke gebracht, die entsprechende Aussparung in den Dimensionen des Stabes aufwies. Von beiden Seiten wurden polierte Messingplatten aufgedrückt. Danach wurde eine Wechselspannung von 400 V einer Frequenz von 100 KHz an die Platten angelegt. Die Anordnung wurde schnell auf 220 °C aufgeheizt. Diese Temperatur liegt oberhalb der Verarbeitungstemperatur des Standard Polystyrols und im LC-Bereich des flüssigkristallinen Polymeren. Nach dem Abkühlen auf Raumtemperatur wird das Wechselfeld abgeschaltet und der Formkörper aus der Form entnommen. An den Formkörper wurde der Elastizitätsmodul im Biegeversuch nach DIN 53 457 bestimmt. Es wurden folgende Werte erhalten :

| Material | Feld-Behandlung | E-Modul [N/mm$^2$] |
|---|---|---|
| Standard-Polystyrol | - | 3000 |
| Mischung 1 | - | 4700 |
| Mischung 1 | 400 V, 100 KHz, 220°C | 9800 |

Beispiel 2

Es wurde aus Hydroxybenzoesäuremethylester, Terephthalsäuredimethylester und Ethylenglykol nach dem Verfahren des Beispiel 1 der US-PS 3 288 755 mit 60 Mol-% Hydroxybenzoesäuremethylester ein flüssigkristallines Polymeres hergestellt, das eine inherente Viskosität von 0,55 (gemessen in Phenol/ortho-Dichlorbenzol 3 : 2) bei 25 °C).

Es wurde eine Mischung aus 60 Teilen eines Polyethersulfons mit der Schmelzviskosität von 800 Pas bei 350 °C und 40 Teilen des obengenannten flüssigkristallinen Polymeren bei 350 °C auf einem Doppelschneckenextruder gemischt und granuliert. Von dieser Mischung wurden anschließend flachstäbe der Dimension 5 × 1/2 × 1/16" (127 × 12.7 × 1.58 mm) gespritzt.

Analog wie in Beispiel 1 beschrieben wurden Stäbe in eine Teflonform gebracht, an die plattenförmige Elektroden angelegt waren. Es wurde ein elektrisches Wechselfeld von 800 V bei 100 KHz angelegt. Danach wurd die Form auf 340 °C gebracht und 2 Minuten bei dieser Temperatur belassen und danach abgekühlt. Nach dem Abkühlen wurde das Wechselfeld abgeschaltet.

An den Proben wurde ein Elastizitätsmodul nach dem Biegeversuch DIN 53 487 bestimmt. Es wurden folgende Ergebnisse erhalten :

| Material | E-Feld | E-Modul [N/mm$^2$] |
|---|---|---|
| Ultrason E 2000 | - | 2 600 |
| Mischung 2 | - | 4 000 |
| Mischung 2 | 800 V, 100 KHz, 340°C | 8 300 |

**Patentansprüche**

1. Verfahren zur Herstellung von Formkörpern aus Mischungen, die thermoplastische Kunststoffe und flüssigkristalline Polymere enthalten durch Formgebung bei Temperaturen oberhalb der Bearbeitungstemperatur des thermoplastischen Kunststoffes und innerhalb des flüssigkristallinen Bereiches des flüssigkristallinen Polymeren, dadurch gekennzeichnet, daß bei der angewandten Temperatur auf die Mischung ein elektrisches oder magnetisches Feld einwirkt.

2. Verfahren nach Ansrpuch 1, dadurch gekennzeichnet, daß ein statisches elektrisches Feld einwirkt.

3. Verfahren nach Anspruch 1, dadurch gekennzeichnet, daß ein elektrisches Wechselfeld einwirkt.

**Claims**

1. A process for the production of shaped articles from mixtures containing thermoplastics and liquid crystalline polymers, by shaping at a temperature above the processing temperature of the thermoplastic and within the liquid crystalline range of the liquid crystalline polymer, wherein an electric or magnetic field acts on the mixture at the temperature employed.

2. A process as claimed in claim 1, wherein a static electric field acts on the mixture.

3. A process as claimed in claim 1, wherein an AC electric field acts on the mixture.

**Revendications**

1. Procédé de production d'objets moulés à partir de mélanges contenant des matières thermoplastiques et des polymères cristallins-liquides par formage à des températures supérieures à la température de moulage de la matière thermoplastique, mais comprises dans la région de l'état cristallin-liquide du polymère cristallin-liquide, caractérisé en ce que l'on soumet le mélange, à la température appliquée, à l'action d'un champ électrique ou magnétique.

2. Procédé suivant la revendication 1, caractérisé en ce que l'on fait agir un champ électrique statique.

3. Procédé suivant la revendication 1, caractérisé en ce que l'on fait agir un champ électrique alternatif.